# EUROPEAN PATENT SPECIFICATION

(11) **EP 0 325 256 B1**
(45) Date of publication and mention of the grant of the patent: **13.09.1995**
(21) Application number: 89100893.0
(22) Date of filing: 19.01.1989
(51) Int. Cl.: H04N 5/93, H04N 5/94

(54) **Apparatus for reproducing digital video signal**
Gerät zum Wiedergeben von digitalen Videosignalen
Dispositif pour la reproduction de signaux vidéo numériques

(30) Priority: 22.01.1988 JP 10738/88
(43) Date of publication of application: 26.07.1989
(73) Proprietor: SONY CORPORATION, Tokyo 141 (JP)
(72) Inventor: Kaminaga, Kozo, Shinagawa-ku Tokyo (JP)
(74) Representative: TER MEER STEINMEISTER & PARTNER GbR

(56) References cited:
- EP-A- 0 160 539
- EP-A- 0 177 231
- GB-A- 2 121 229
- PATENT ABSTRACTS OF JAPAN vol. 11, no. 95 (E-492)25 March 1987 & JP-A-61 247 181

## Description

### BACKGROUND OF THE INVENTION:

### Field of the Invention:

The present invention relates to an apparatus for reproducing digital video signals recorded on a tape in such a manner that digital video signals constituting each field of image information are divided into a plurality of sectors each being recorded on mutually different tracks, said apparatus comprising:
a rotary head drum having two or more displaceable reproducing heads spaced apart by a predetermined angle for reproducing the recorded digital video signals from the plurality of sectors from said tracks;
memory means for storing the reproduced digital video signal and means for outputting from the memory means the reproduced digital video signals; and
means for supplying a control signal to said displaceable reproducing heads so as to change their vertical position

Such an apparatus is known from EP-A-0177231.

### Description of the Prior Art:

In an apparatus of a type which digitally records and reproduces video signals, there exists an advantage that substantially no deterioration is caused with regard to the image quality in an operation of editing or dubbing a tape. However, due to a high density in recording video data on a magnetic tape, it becomes difficult to record video data of one field on a single slant track.

For the purpose of eliminating such disadvantage, an improvement has been developed for practical use wherein video data of one field are recorded on a plurality of slant tracks by a plurality of rotary heads so that one field of the image can be reproduced by playback of the plural slant tracks.

In this case, if one field of the image is divided into an odd number of sectors and such field sectors are sequentially associated with an even number of playback heads, the heads corresponding to the same pixels on the image come to be different per field, so that even when one of the playback heads is rendered faulty, the non-reproduced pixel data in one field can be replaced with the pixel data in the next field. However, in case one field of the image is divided into an even number of sectors by reason of the data rate, there may arise a problem that the playback heads corresponding to the same pixels remain the same in the entire fields. As a result, if one of the heads is caused to be faulty, there comes out a possibility that the non-reproduced pixel data cannot be concealed.

Head-jumping in the known EP-A-0177231 is carried out at a speed different from the normal reproduction speed using dynamic tracking by successively two half-tracks from the first part of the first pair of adjacent oblique tracks, then jumping to reproduce two half-tracks from the second part of the second pair of adjacent oblique tracks, adjacent to the first pair and so on until all the data of one field has been reproduced and then jumping to another field. To carry out this head-jumping, each field of a TV-signal is recorded on a video tape in twenty half-tracks, wherein adjacent half-tracks are not abutting in centre thereof, but are separated by a relatively long gap which, in particular, is sufficient long to result, during reproduction in a time interval sufficiently long for each head that is reproducing the oblique track to jump at least two tracks in either direction. This document EP-A-0177231 does not propose to reverse the vertical positions of the reproducing heads for each field.

### OBJECTS AND SUMMARY OF THE INVENTION

It is therefore an object of the present invention to provide a digital video signal reproducing apparatus which is capable of eliminating the conventional drawbacks observed in the prior art.

To solve the above object, the apparatus for reproducing digital video signals constructed in accordance with the precharacterizing part of claim 1 is, according to the invention, constructed in accordance with the characterizing features of claim 1.

Accordingly, an essential aspect of the invention is that supplying means supply said control signal to said displaceable reproducing heads so as to rapidly displace for each field the vertical position of the reproducing heads in the direction perpendicular to the track direction from one position to another such that a first sector of the field being scanned by one of the heads and a second sector of the field being scanned by the other head in one field are scanned in the directly following field so that the first sector is then scanned by the other head and the second sector is then scanned by the one head.

Dependent claims 2 to 6 each characterize an advantageous development thereof. Particularly the main advantage of the present invention resides in an improved digital video signal reproducing apparatus which can perform concealment of the data despite occurrence of any fault such as clog in the playback head or dropout.

### BRIEF DESCRIPTION OF THE DRAWINGS :

Fig. 1 schematically illustrates an exemplary rotary head drum employed in the digital signal reproducing apparatus of the present invention;
Fig. 2 schematically illustrates a recording pattern on a tape to be reproduced by an exemplary embodiment of the digital signal reproducing apparatus according to the present invention;
Figs. 3A and 3B are schematic diagrams for explaining the operation performed in the digital signal reproducing apparatus of the invention;
Figs. 4A through 4C schematically illustrate the relationship between playback heads and tracks to explain the operation in the exemplary embodiment of the invention;
Figs. 5A through 5C schematically illustrate the correlationship between the video data of each field and the playback heads in the state of reproduction shown in Figs. 4A through 4C;
Fig. 6 is a block diagram of an exemplary signal processing circuit in the digital signal reproducing apparatus of the invention; and
Fig. 7 is a timing chart representing the relationship between head-height position control signals and tracks in the signal processing circuit of Fig. 6.

### DETAILED DESCRIPTION OF THE PREFERRED EMBODIMENTS:

Hereinafter a video tape recorder (VTR) applying the digital video signal reproducing apparatus of the present invention will be described with reference to the accompanying drawings.

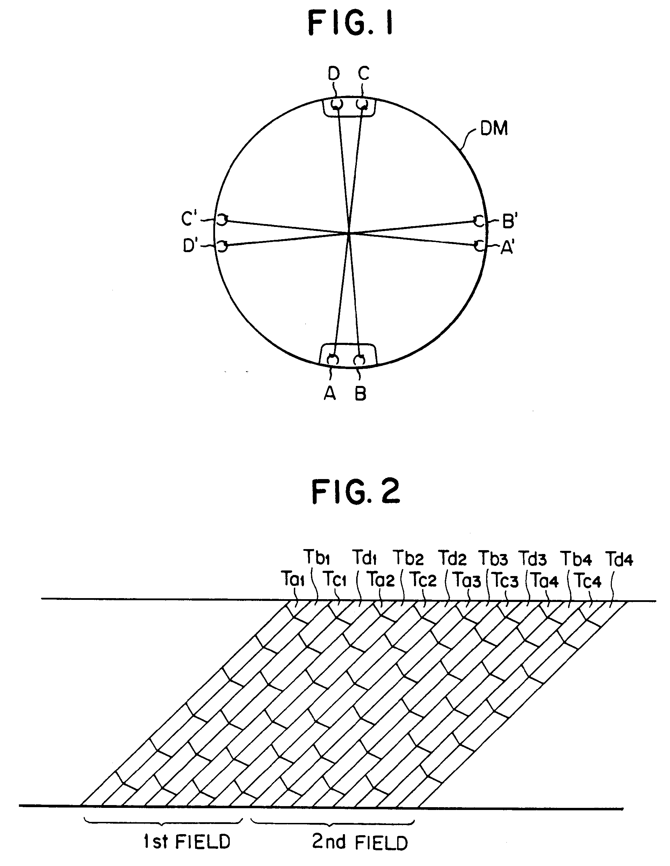

Fig. 1 shows an exemplary rotary head drum DM employed in the VTR according to the present invention, wherein the drum DM is equipped with two sets of playback heads A·B and C·D at opposed positions spaced apart with an angular interval of 180°.

The playback heads A·B and C·D have mutually different azimuths and are so disposed as to have an adequate positional difference in the vertical direction of the rotary drum, i.e. in the direction perpendicular to the track direction.

There are also provided two sets of recording head A′·B′ and C′·D′ similarly at opposed positions spaced apart with an angular interval of 180°.

The playback heads A·B and C·D are mounted on displaceable type head bases of which vertical positions are controllable and rapidly displaceable by the use of bimorph elements or the like as known well, so that the recording tracks can be exactly traced with tracking control signals supplied thereto. And such tracking control ensures output of high-quality RF signals even in a fast playback mode or slow playback mode.

If the rotary drum DM is so set as to rotate at a frequency of 100 Hz and a predetermined tape speed is selected, the video data obtained at a rate of 50 fields/sec can be recorded with a track pattern shown in Fig. 2.

That is, the video data of one field are recorded on eight tracks Ta₁, Tb₁, Tc₁, Td₁, Ta₂, Tb₂, Tc₂, and Td₂, and then the video data of the next field are recorded on tracks Ta₃, Tb₃, Tc₃, Td₃, Ta₄, Tb₄, Tc₄, and Td₄. In Fig. 2, the mutually different azimuths of the playback heads A·B and C·D are indicated on each track.

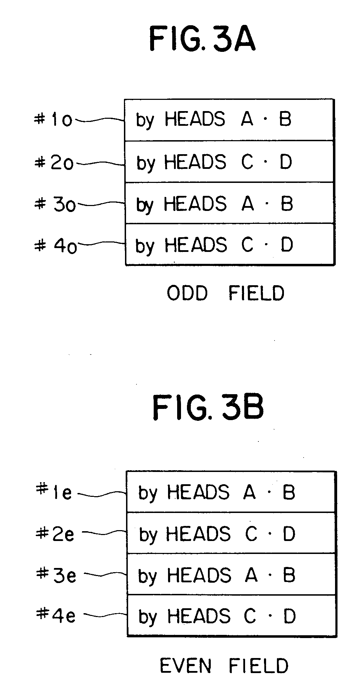

As illustrated in Figs. 3A and 3B, the first line through the last line in each of the odd fields and even fields are distributed into four sectors #1ₒ, #2ₒ, #3ₒ, #4ₒ and #1e, #2e, #3e, #4e respectively, and the video data of the individual sectors are recorded while being adequately distributed to form pairs of tracks.

Therefore, when such tracks are reproduced by the playback heads A·B and C·D, the data of the individual sectors #1ₒ, #2ₒ, #3ₒ, #4ₒ of each odd field are reproduced by the playback heads A·B, C·D, A·B, C·D respectively; and also the data of the individual sectors #1e, #2e, #3e, #4e of each even field are reproduced in a similar manner.

In such recording pattern, the positionally coincident sectors, e.g. #1ₒ and #1e in the mutually adjacent fields are reproduced by the same heads A·B, so that if proper reproduction fails to be performed due to clog or the like in one see of playback heads A·B out of the pair as mentioned previously, the data of the sectors #1ₒ, #3ₒ and #1e, #3e are lost to eventually render the error data correction impossible even with concealment between the fields.

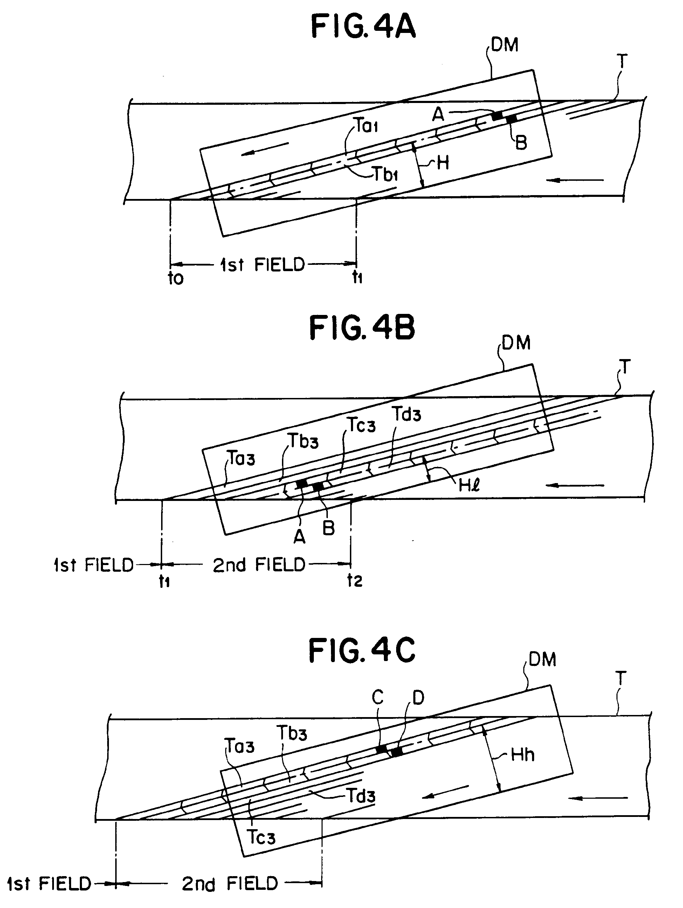

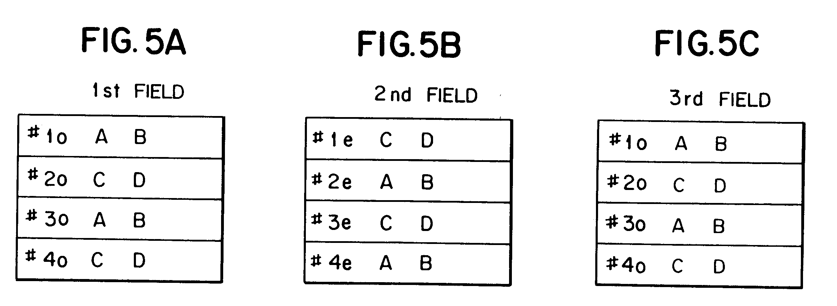

In the present invention, therefore, a control voltage is applied to the bimorph bases where the playback heads A·B and C·D are attached, so as to control the heights of the heads for selection of the tracks to be reproduced. First, as shown in Fig. 4A with regard to the portion of the tape T where video data of the odd or first field are recorded between time t₀ and t₁, the control voltage is not applied to the bimorph bases of the playback heads A·B or to those of unshown playback heads C·D either. Then the video data are reproduced initially from the tracks Ta₁, Tb₁ by the playback heads A·B as shown in Fig. 4A, and during the next half rotation, the video data are reproduced from two tracks Tc₁, Td₁ by the playback heads C·D although not shown. Consequently, eight tracks are reproduced with two rotations of the playback heads, and the data of the sectors #1ₒ, #2ₒ, #3ₒ, #4ₒ constituting the image of the first field are reproduced as shown in Fig. 5A. And during reproduction of the video data between time t1 and t2 in the next second field, the control voltage is applied to the bimorph bases in such a manner that the vertical positions or heights of the playback heads A·B and C·D are changed in reverse directions to each other.

As a result, the playback heads A·B are displaced to have a height Hℓ at the first reproducing position in the even or second field so that, instead of the tracks Ta₃, Tb₃ which should be reproduced at this time in the second field, the tracks Tc₃, Td₃ anterior thereto by a distance of two tracks come to be reproduced by the playback heads A·B. Therefore, in the second field, the video data of the sector #2e are reproduced by the playback heads A·B as shown in Fig. 5B.

During the next half rotation in the second field, the vertical positions of the playback heads C·D are controlled to a height Hₕ as shown in Fig. 4C so that, instead of the tracks Tc₃, Td₃ which should be reproduced by the playback heads C,D, the tracks ta₃, Tb₃ posterior thereto by a distance of two tracks come to be reproduced, whereby the video data of the sector #1e are reproduced by the playback heads C·D as shown in Fig. 5B.

Thus, during the time period of the even field, the video data on the tracks to be reproduced originally by the playback heads A·B are outputted from the playback heads C·D, while the video data on the tracks to be reproduced by the playback heads C·D are outputted from the playback heads A·B.

As will be described later, the digital VTR is equipped with a field memory to store at least the processed data of individual blocks for carrying out error detection and correction by an inner code with regard to the reproduced video data to correct the error therein and also for carrying out error detection and correction by an outer code as well as for the processing in a variable speed playback mode. Therefore, even when the sequence of writing the output data is different from the regular one, the video data can be read out as normal reproduced data with remarkable facility if the identification signals for identifying the fields and the tracks are reproduced simultaneously, and the error correction and so forth of the reproduced video data are executed substantially in the same manner as in the conventional signal processing circuit of the playback unit.

Accordingly, the playback heads for reproducing the video data of the individual sectors can be changed in the adjacent fields Ly switching the control voltage, which is applied to the bimorph bases, per field corresponding to the two rotations of the drum, as shown in Figs. 5A through 5C.

Consequently, even when one set of playback heads C·D out of the pair become faulty as mentioned previously, it is still possible to obtain a satisfactory image substantially without any deterioration of the image quality by executing interfield concealment with the video data in the positionally coincident sectors of the adjacent fields.

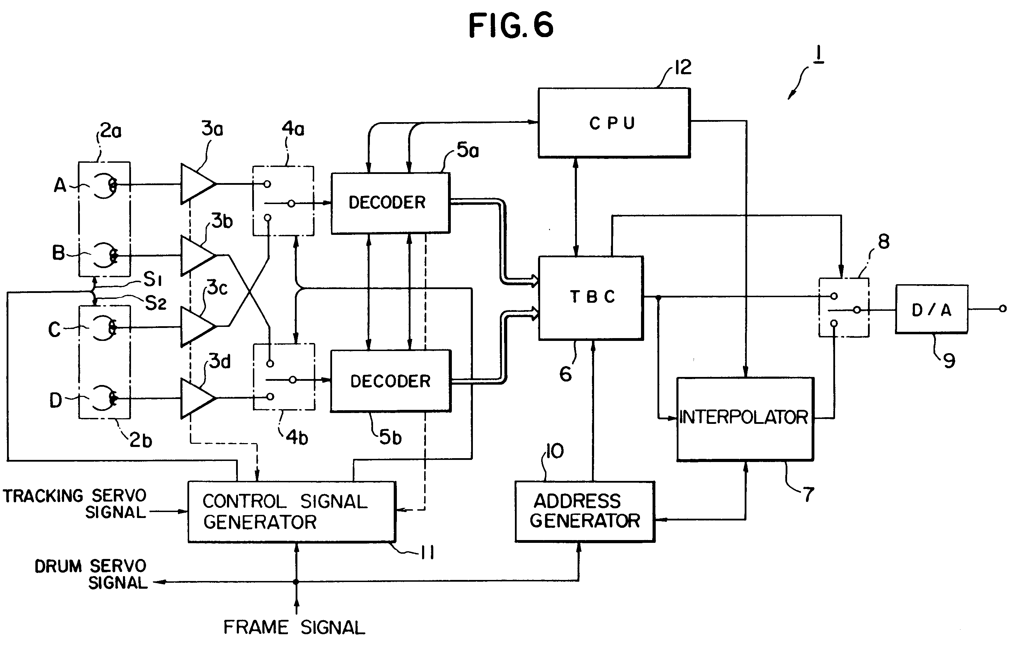

Fig. 6 is a block diagram of an exemplary signal processing circuit applicable to the digital video signal reproducing apparatus of the present invention, in which a pair of opposed playback head sets 2a, 2b are attached to the aforementioned rotary drum DM, and first-stage reproduced signal amplifiers 3a, 3b, 3c, and 3d connected to the playback head sets 2a, 2b are further connected via head switches 4a, 4b to decoders 5a, 5b which convert the reproduced signals into digital codes and provide output video data after error data detection and correction.

The decoders 5a, 5b are connected to an interpolator 7 via a time base corrector (TBC) 6. The interpolator 7 serves to control the output timing of the reproduced video data and also executes timing control of the chroma signal. The interpolator 7 is connected via a switch 8 to a D/A converter 9.

An address generator 10 is connected to both the TBC 6 and the interpolator 7 so as to supply thereto a write address, a read address and a clock signal. Further shown is a control signal generator 11 which supplies a control signal to the playback head sets 2a, 2b for controlling the heights of the playback heads A·B and C·D and also supplies a switching signal to the switches 4a, 4b. Such control signals are outputted in accordance with a frame signal, a tracking servo signal and so forth. And the above-described circuits are controlled by a CPU 2 furnished with a signal processing program therein.

Now a description will be given with regard to the operation of the signal processing circuit 1. The reproduced digital signals from the playback heads A·B and C·D in the pair of head sets 2a and 2b are supplied to the switches 4a and 4b via the playback amplifiers 3a, 3b, 3c, and 3d respectively.

The control signal generator 11 is supplied with a frame signal formed on the basis of the reproduced signals and, when the playback heads A·B are scanning the tracks, the switches 4a, 4b are connected to the playback amplifiers 3a, 3b respectively, so that the reproduced digital signals from the playback heads A·B are supplied to the decoders 5a, 5b respectively. Meanwhile, when the playback heads C·D are scanning the tracks, the switches 4a, 4b are connected to the playback amplifiers 3c, 3d respectively, so that the reproduced digital signals from the playback heads C·D are supplied to the decoders 5a, 5b respectively.

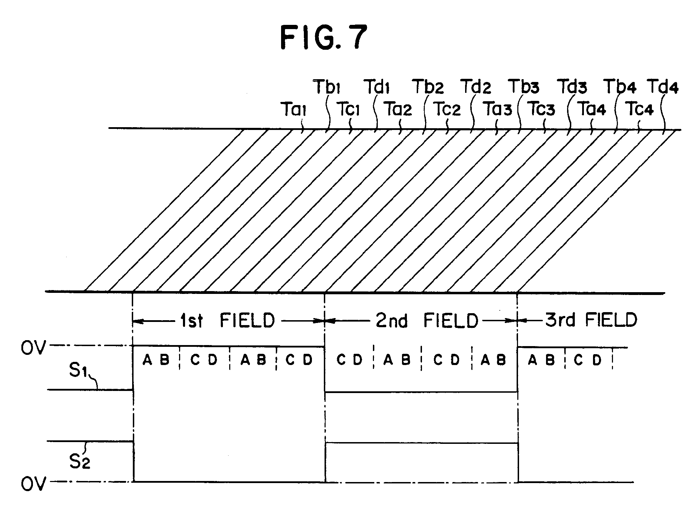

The control signal generator 11 is further supplied with a tracking servo signal so as to achieve proper tracking of the playback head sets 2a and 2b under control. Besides the above, for the purpose of controlling the heights of the heads on the basis of the frame signal in accordance with an odd or even field, head-height position control signals S1, S2 inverted per period of each field as shown in Fig. 7 are supplied to the bimorph bases of the playback head sets 2a, 2b are mounted. Each of the control signals S1, S2 may be such that the tracking servo signal is superposed thereon.

The decoders 5a, 5b demodulate the reproduced digital signals modulated previously by a predetermined method, and detect block sync signals from the digital data thus demodulated. Any identification signals added to each block for identifying its field, track and block numbers are detected from the block. The decoders 5a, 5b further perform, with regard to each block, data error detection and correction of data by the use of an inner code and thereafter perform, with regard to each sector astriding a plurality of blocks, data error detection and correction of data by the use of an outer code.

The data thus corrected are written in the TBC 6 together with an error flag which represents the result of such correction. However, in case there exists any error, an error flag alone may be written. The data written in the TBC 6 can be discriminated in regard to the field number, track number, block number and sample number thereof from the identification signals obtained from the reproduced video signals, so that the addresses to be written in the TBC 6 are fed from the decoders 5a, 5b on the basis of the information thus obtained. The TBC 6 is composed of a memory having a capacity of, e.g. two fields. And even when the playback heads scan other tracks different from those corresponding thereto originally, the data are written, in conformity with the write addresses generated on the basis of the identification signals, at proper address positions in the memory without depending on the playback heads, and the data are so rearranged as to form a normal image. The data rearranged and time base corrected by the TBC 6 are read out in conformity with the read addresses obtained from the address generator 10, and then are supplied via the switch 8 to the D/A converter 9 where the data are converted into analog video signals.

The interpolator 7 is equipped with a field memory to store the output data of the TBC 6 based on the write addresses from the address generator 10. In a modification, the write addresses may be fed from the TBC 6.

When any erroneous data is read out from the TBC 6, an error flag concomitant therewith is read out and fed to the switch 8, so that the data posterior by a distance of one field is supplied from the interpolator 7 to the D/A converter 9 after the chroma processing carried out under control of the CPU 12, thereby executing the desired interpolation.

The circuit configuration may be so modified that, as indicated by a dotted line in Fig. 6, clog of the playback heads A·B or C·D is detected in accordance with the level of the error flag outputted from one of the decoders 5a, 5b or in accordance with the output level of the first-stage amplifiers 3a through 3d, and the head-height control signals S1, S2 are outputted from the control signal generator 11 in response merely to the detection signal that represents failure of reproduction of the normal video data.

Although the above embodiment has been explained with regard to an exemplary case where the video data of each field are divided into four sectors and recorded on eight tracks, the number of such sectors is not limited to four alone, and the recording pattern may be so modified that video data forming one image field can be reproduced from four tracks.

It is also to be understood that, in the digital video data reproducing apparatus of the present invention, the number of opposed heads is not limited to two or four alone, and a modified type with rotary heads disposed at equal angular intervals may also be employed to reproduce video data dispersed in a plurality of tracks.

Furthermore, the present invention is applicable also to another case where the video data of an image divided into an odd number of sectors are recorded on an odd number of tracks.

According to the digital video signal reproducing apparatus of the present invention, as mentioned hereinabove, the vertical positions or heights of playback heads are controllable in each of fields so that, in reproduction of a tape where video data are recorded while one image field is divided into a plurality of sectors, the data concerned with the sector positions of the reproduced image in the adjacent field are outputted from different ones of the two or more opposed playback heads. Therefore, upon occurrence of any fault such as clog or the like in one set of the playback heads out of the pair, the video data can be interpolated due to the correlation between the fields, whereby a remarkably advantageous effect is attainable in averting deterioration of the image quality despite such fault.

## Claims

1. An apparatus for reproducing digital video signals recorded on a tape in such a manner that digital video signals constituting each field of image information are divided into a plurality of sectors (# 1ₒ, # 2ₒ, # 3ₒ, # 4ₒ, # 1ₑ, # 2ₑ, # 3ₑ, # 4ₑ) each sector being recorded on mutually different tracks (Tₐ₁, T_{b1}, T_{c1}, T_{d1}; Tₐ₂, T_{b2}, T_{c2}, T_{d2}; Tₐ₃, T_{b3}, T_{c3}, T_{d3}; Tₐ₄, T_{b4}, T_{c4}, T_{d4}), said apparatus comprising:
a rotary head drum (DM) having two or more displaceable reproducing heads (A, B, C, D; 2ₐ, 2_{b}) spaced apart by a predetermined angle for reproducing the recorded digital video signals from the plurality of sectors of said tracks;
memory means (5ₐ, 5_{b}, 6, 10) for storing the reproduced digital video signal and means for outputting from the memory means the reproduced digital video signals in a correct sequence; and
supplying means for supplying a control signal to said displaceable reproducing heads so as to change their vertical position
characterized in that
said supplying means supply said control signal to said displaceable reproducing heads so as to rapidly displace for each field their vertical position of the reproducing heads in the direction perpendicular to the track direction such that a first sector of the field being scanned by one of the heads and a second sector of the field being scanned by the other head in one field are scanned in the directly following field so that the first sector is then scanned by the other head and the second sector is then scanned by the one head.

2. The apparatus according to claim 1, wherein said rotary head drum is equipped with the reproducing heads spaced apart with an angle of 180 degrees from each other.

3. The apparatus according to claim 1, wherein said rotary head drum is equipped with two sets of displaceable reproducing heads, each set being spaced apart from each other.

4. The apparatus according to claim 1, wherein said supplying means supply said control signal to said reproducing heads merely when the state of the reproduced digital video signal is deteriorated.

5. The apparatus according to claim 1, wherein the vertical position of the two heads is rapidly displaced from one position to another when switching from an even field to an odd field occurs.

6. The apparatus according to claim 1, wherein the vertical position of the heads is rapidly displaced from one position to another between fields such that even if one of the heads becomes faulty, a satisfactory image without substantial deterioration of image quality is provided by inter-field concealment by use of video data being reproduced by the head which is not faulty.

## Patentansprüche

1. Gerät zum Wiedergeben digitaler Videosignale, die auf einem Band auf solche Weise aufgezeichnet sind, daß digitale Videosignale, die jedes Halbbild von Bildinformation aufbauen, in mehrere Sektoren (#1ₒ, #2ₒ, #3ₒ, #4ₒ, #1ₑ, #2ₑ, #3ₑ, #4ₑ) unterteilt sind, wobei jeder Sektor in voneinander verschiedenen Spuren (Tₐ₁, T_{b1}, T_{c1}, T_{d1}; Tₐ₂, T_{b2}, T_{c2}, T_{d2}; Tₐ₃, T_{b3}, T_{c3}, T_{d3}; Tₐ₄, T_{b4}, T_{c4}, T_{d4}) aufgezeichnet ist, mit:
- einer rotierenden Kopftrommel (DM) mit zwei oder mehr verstellbaren Abspielköpfen (A, B, C, D; 2ₐ, 2_{b}), die um einen vorgegebenen Winkel voneinander beabstandet sind, um die aufgezeichneten digitalen Videosignale aus den mehreren Sektoren der Spuren abzuspielen;
- einer Speichereinrichtung (5ₐ, 5_{b}, 6, 10) zum Einspeichern des abgespielten digitalen Videosignals, und einer Einrichtung zum Ausgeben der abgespielten digitalen Videosignale in korrekter Abfolge aus der Speichereinrichtung; und
- einer Zuführeinrichtung zum Zuführen eines Steuersignals zu den verstellbaren Abspielköpfen, um deren Vertikalposition zu ändern;
**dadurch gekennzeichnet, daß**
- die Zuführeinrichtung das Steuersignal an die verstellbaren Abspielköpfe liefert, um die Vertikalposition der Abspielköpfe für jedes Halbbild schnell in der Richtung rechtwinklig zur Spurrichtung so zu verstellen, daß ein erster Sektor des von einem der Köpfe abgerasterten Halbbilds und ein zweiter Sektor des vom anderen Kopf in einem Halbbild abgerasterten Halbbilds im direkt folgenden Halbbild so abgerastert werden, daß dann der erste Sektor durch den anderen Kopf abgerastert wird und der zweite Sektor dann durch den einen Kopf abgerastert wird.

2. Gerät nach Anspruch 1, bei dem die rotierende Kopftrommel mit Abspielköpfen versehen ist, die mit einem Winkel von 180° voneinander beabstandet sind.

3. Gerät nach Anspruch 1, bei dem die rotierende Kopftrommel mit zwei Sätzen verstellbarer Abspielköpfe versehen ist, wobei die Sätze voneinander beabstandet sind.

4. Gerät nach Anspruch 1, bei dem die Zuführeinrichtung das Steuersignal lediglich dann an die Abspielköpfe liefert, wenn der Zustand des abgespielten digitalen Videosignals beeinträchtigt ist.

5. Gerät nach Anspruch 1, bei dem die Vertikalposition der zwei Köpfe dann schnell von einer Position auf eine andere verstellt wird, wenn das Umschalten von einem geradzahligen auf ein ungeradzahliges Halbbild auftritt.

6. Gerät nach Anspruch 1, bei dem die Vertikalposition der Köpfe zwischen Halbbildern schnell von einer Positon auf eine andere verstellt wird, so daß selbst dann, wenn einer dieser Köpfe fehlerhaft wird, ein zufriedenstellendes Bild ohne wesentliche Beeinträchtigung der Bildqualität durch eine Zwischenhalbbild-Überdeckung unter Verwendung von Videodaten erzielt wird, die vom Kopf abgespielt werden, der nicht fehlerhaft ist.

## Revendications

1. Dispositif pour la reproduction de signaux vidéo numériques enregistrés sur une bande de telle manière que les signaux vidéo numériques constituant chaque trame d'informations d'image sont divisés en une pluralité de secteurs (n° 1₀, n° 2₀, n° 3₀, n° 4₀; n°1ₑ, n° 2ₑ, n° 3ₑ, n° 4ₑ), chaque secteur étant enregistré sur des pistes mutuellement différentes ( Tₐ₁, T_{b1}, T_{c1}, T_{d1}; Tₐ₂, T_{b2}, T_{c2}, T_{d2}; Tₐ₃, T_{b3}, T_{c3}, T_{d3}; Tₐ₄, T_{b4}, T_{c4}, T_{d4}), ledit dispositif comprenant:
un touret de têtes rotatives (DM) comportant deux têtes ou plus de reproduction pouvant être déplacées (A,B,C,D;2a,2b) espacées d'un angle prédéterminé pour la reproduction des signaux vidéo numériques enregistrés dans la pluralité des secteurs desdites pistes;
un moyen à mémoire (5a,5b,6,10) pour mémoriser le signal vidéo numérique reproduit et un moyen pour sortir du moyen à mémoire les signaux vidéo numériques reproduits dans une séquence correcte; et,
des moyens de fourniture pour fournir un signal de commande auxdites têtes de reproduction pouvant être déplacées de manière à changer leur position verticale,
caractérisé en ce que
lesdits moyens de fourniture fournissent ledit signal de commande auxdites têtes de reproduction pouvant être déplacées de manière à déplacer rapidement la position verticale des têtes de reproduction, pour chaque trame, dans la direction perpendiculaire à la direction des pistes telle qu'un premier secteur de la trame qui est balayée par l'une des têtes et un second secteur de la trame qui est balayée par l'autre tête dans une trame sont balayés dans la trame directement à la suite, de telle sorte que le premier secteur est balayé ensuite par l'autre tête et le second secteur est balayé ensuite par la tête.

2. Dispositif selon la revendication 1, dans lequel ledit touret de têtes rotatives est équipé des têtes de reproduction espacées d'un angle de 180 degrés entre elles.

3. Dispositif selon la revendication 1, dans lequel ledit touret de têtes rotatives est équipé de deux groupes de têtes de reproduction pouvant être déplacées, chaque groupe étant espacé de l'autre.

4. Dispositif selon la revendication 1, dans lequel lesdits moyens de fourniture fournissent ledit signal de commande auxdites têtes de reproduction simplement quand l'état du signal vidéo numérique reproduit est altéré.

5. Dispositif selon la revendication 1, dans lequel la position verticale des deux têtes est déplacée rapidement d'une position à une autre quand se produit le passage d'une trame paire à une trame impaire.

6. Dispositif selon la revendication 1, dans lequel la position verticale des têtes est déplacée rapidement d'une position à une autre entre des trames telles que, même si l'une des têtes devient défectueuse, une image satisfaisante est obtenue sans diminution sensible de la qualité de l'image par masquage inter-trame par l'utilisation des données vidéo reproduites par la tête qui n'est pas défectueuse.
